# EUROPEAN PATENT SPECIFICATION

(11) **EP 2 624 257 B1**
(45) Date of publication and mention of the grant of the patent: **02.11.2016**
(21) Application number: 13153637.7
(22) Date of filing: 01.02.2013
(51) Int. Cl.: G21F 9/16, C04B 7/00, G21F 9/30, C04B 28/02, C04B 28/04, C04B 28/06, C04B 28/08

(54) **Processing method and processing apparatus for radioactive waste**
Verarbeitungsverfahren und Verarbeitungsvorrichtung für Atommüll
Procédé et appareil de traitement de déchets radioactifs

(30) Priority: 03.02.2012 JP 2012021903
(43) Date of publication of application: 07.08.2013
(73) Proprietor: Kabushiki Kaisha Toshiba, Tokyo 105-8001 (JP)
(72) Inventor: Yamasaki, Ayaka, Tokyo 105-8001 (JP); Takada, Takao, Tokyo 105-8001 (JP); Motohashi, Tetsuo, Tokyo 105-8001 (JP); Takahashi, Hiromasa, Tokyo 105-8001 (JP)
(74) Representative: Hoffmann Eitle

(56) References cited:
- JP-A- H08 152 498
- JP-A- 2003 262 698
- JP-A- 2011 075 407
- JP-B2- 3 188 595

## Description

### FIELD

Embodiments disclosed herein generally relate to a processing method and a processing apparatus for radioactive waste.

### BACKGROUND

In a nuclear power plant, a nuclear facility, and the like, a waste liquid in which a radioactive waste liquid is concentrated is produced. In a boiling water reactor (BWR), main components of this waste liquid are sodium sulfate and iron, and the concentration of sodium sulfate is about 5 mass% to about 25 mass% and the concentration of iron is about 0.1 mass% to about 5 mass%. In a pressurized water reactor (PWR), a main component of the waste liquid is boron and its concentration is about 0.5 mass% to about 5 mass%.

Portland cement or blast-furnace cement is usually added to these waste liquids, and by an in-drum method or an out-drum method, they are solidified by the cement, for example, in a 200 L drum after being kneaded. These cement-solidified products are buried in the ground. In view of a site or the like where to bury the drum, it is necessary to suppress an amount of the radioactive waste produced, that is, to reduce a volume of the radioactive waste. This has led to a recent development of a system which further promotes the concentration of the waste liquid, dries a waste liquid to turn its main component into powder, and solidifies the powder by cement, plastic, or the like.

Further, in a power plant, solid wastes such as powder ion exchange resin and granular ion exchange resin for cleaning water in the plant (condensed water) are also produced, and these wastes are also dehydrated to be solidified by cement.

In the cement-solidification step, in any of the cases of the in-drum method and the out-drum method, the cement, the waste liquid or the solid waste, and water are kneaded, and according to the kind of the waste liquid or the waste, the viscosity of a kneaded product differs. From this point of view, there has been disclosed a method which separately decides a characteristic value and sets a rotation speed of a stirring blade for kneading a kneaded product, so as to make the kneaded product fall within a predetermined range of this characteristic value (refer to JP-A 2011-149803 (KOKAI)).

In the above-described method, however, when the viscosity of the kneaded product is low, the rotation speed of the stirring blade becomes low, and when the viscosity of the kneaded product is high, the rotation speed of the stirring blade becomes high. Accordingly, when the kneading is performed while cement is added to produce the kneaded product, the rotation speed of the stirring blade is not sometimes high enough to fully knead the waste liquid or the waste and the cement. This sometimes leads to a case where the waste liquid or the waste and the cement cannot be fully kneaded, the fed cement is not kneaded to adhere to the stirring blade, and thus it is difficult to obtain a cement-solidified product containing an appropriate amount of the cement and having sufficient strength.

JP 3188595 B2 describes a solidification method for radioactive waste. According to the content of amorphous silica measured in advance, an operator sets a target supply amount of silica fly ash and cement material to a supply amount setter of a mixing controller so that the weight ratio of the amorphous silica to portland cement becomes a ninth to two-thirds and so according to it, a cement supply mechanism and silica supply mechanism throw the cement material and fly ash controlled at the supply amount controller in a mixer. Then, a predetermined amount of sand, cellulose ether, mixing water are thrown from an aggregate tank, a separation prevention tank and a mixing water tank into the mixer and mixed. After mixing, the prepared mixed paste is injected in a solidification vessel filled with miscellaneous waste by opening an exhaust gate.

JP 1981 052498 discloses a method and apparatus for obtaining cement solidified waste. A cement container, a sand container and a waste container are connected to a mixer through transferring pipes. Transferring valves are respectively connected to the transferring pipes. A viscometer is installed in the mixer, and signals measured in the viscometer are inputted into a fluidity controller, which judges whether the quality of the cement paste is good or not. If fluidity is high, judgement output signals from the fluidity controller open a cement transferring valve. If it is low, they open a water transferring valve. In this way, the cement paste is adjusted to have a prescribed fluidity by supplying cement or water. The adjusted cement paste is poured into a drum to solidify radioactive solid wastes with the cement in it.

JP 2003 262698 discloses a method and an apparatus for solidifying radioiactive waste with a cementitious solidifying material. The cementitious solidifying material and the radioactive waste or the cementitious solidifying material, kneading water and the radioactive waste are stowed in a solidification container, where rotating agitating vanes are mounted obliquely on a mixer fixing board. The mixer fixing board is mounted on a rod. The solidification container is put and fixed on a turntable so that it can rotate freely. In the solidification container, the agitating vanes can rotate at a high speed, detention on the lateral face of the bottom part of the solidification container can be prevented and the material and the waste can be mixed uniformly.
Moreover, the mixture can be solidified homogeneously and stably, by rotating the solidification container as well, whilst hoisting and lowering the agitating vanes themselves.

### SUMMARY

It is an object of the present invention to sufficiently knead a radioactive waste and cement to obtain a cement-solidified product containing an appropriate amount of the cement and having sufficient strength when the radioactive waste is processed in such a manner that the radioactive waste and the cement are kneaded by a stirring blade and the resultant cement-kneaded product is solidified.

A processing method for radioactive waste and a processing apparatus for radioactive waste are defined in the appended claims. [0009] When a radioactive waste is processed in such a manner that the radioactive waste and cement are kneaded by a stirring blade and the resultant cement-kneaded product is solidified, it is possible to sufficiently knead the radioactive waste and the cement to obtain a cement-solidified product containing an appropriate amount of the cement and having sufficient strength.

### BRIEF DESCRIPTION OF THE DRAWINGS

FIG. 1 is a diagram showing a schematic structure of a processing apparatus for radioactive waste of a first embodiment.
FIG. 2 is a diagram showing a schematic structure of a processing apparatus for radioactive waste of a second embodiment.

### DETAILED DESCRIPTION

Hereinafter, embodiments will be described in detail with reference to the drawings.

### (First Embodiment)

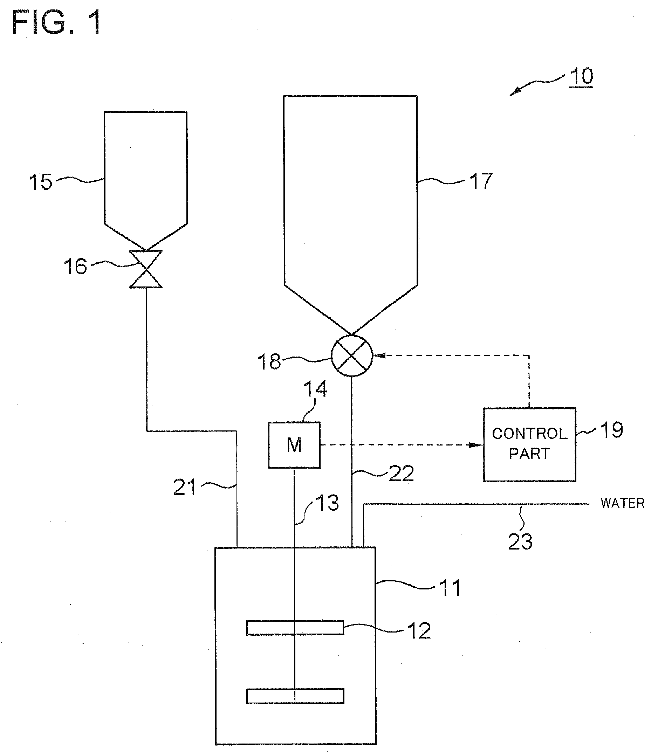

FIG. 1 is a diagram showing a schematic structure of a processing apparatus 10 for radioactive waste in this embodiment. The processing apparatus 10 for radioactive waste has a container 11, a stirring blade 12, a rotating shaft 13, a motor 14, a radioactive waste storage tank 15, a valve 16, a cement storage tank 17, a cement supply feeder 18, a control part 19, and pipes 21 to 23.

The container 11 is a container where to knead a radioactive waste and cement to produce a cement-kneaded product containing the radioactive waste, the cement, and water, and the stirring blade 12 is disposed therein. The stirring blade 12 is attached to a tip portion of the rotating shaft 13 attached to the motor 14 (driving part) and stirs the cement-kneaded product.

Above the container 11, the radioactive waste storage tank 15 and the cement storage tank 17 are disposed. The radioactive waste storage tank 15 is connected to the container 11 via the valve 16 and the pipe 21. The cement storage tank 17 is connected to the container 11 via the cement supply feeder 18 and the pipe 22. The cement supply feeder 18 functions as a feeding part configured to feed the cement into the container 11. The pipe 23 for supplying the water (kneading water) when necessary is connected to the container 11. The pipe 23 is connected to a not-shown industrial water tank.

The control part 19 is connected to the motor 14 and the cement supply feeder 18. The control part 19 adjusts a drive current supplied to the motor 14. The control part 19 adjusts an amount of the cement supplied from the cement storage tank 17 into the container 11, according to a magnitude of a value of the drive current supplied to the motor 14.

The control part 19 functions as the following first to fourth control parts:
- the first control part configured to control the driving part so as to cause the stirring blade to rotate at a rotation speed in a predetermined range and to monitor the value of the drive current of the driving part;
- the second control part configured to control the feeding part (cement supply feeder 18) so as to maintain a feeding rate of the cement at a predetermined feeding rate until the monitored value of the drive current starts to increase from the given value; and
- the third control part configured to control the feeding part so as to make the feeding rate of the cement lower than the predetermined feeding rate after the monitored value of the drive current starts to increase.

Incidentally, as will be described below, in this embodiment, a cement-kneaded product and a cement-solidified product are produced in the same container 11. That is, the cement-solidified product is produced by an in-drum system.

The container 11, the stirring blade 12, the rotating shaft 13, the radioactive waste storage tank 15, the cement storage tank 17, and the pipes 21 to 23 are made of a highly corrosion resistant material such as stainless steel.

Next, a processing method for radioactive waste using the processing apparatus 10 shown in FIG. 1 will be described.

First, into the container 11 of the processing apparatus 10, the radioactive waste is led from the radioactive waste storage tank 15 and at the same time, the water is led from the pipe 23.

In this embodiment, after the kneading of the radioactive waste and the water is started, the cement is fed into the container 11 from the cement storage tank 17 via the cement supply feeder 18. In this case, immediately after the feeding of the cement is started, a supply amount of the cement is made large so that a predetermined amount of the cement can be fed in as short a time as possible.

Alternatively, similarly to the radioactive waste and so on, the cement may be fed into the container 11 before the kneading is started. In this case, however, the feature of this embodiment cannot be sometimes fully exhibited.

The radioactive waste can be subjected to predetermined pre-processing according to its kind before being led into the container 11. For example, when the radioactive waste is a boron-containing waste liquid or other acid waste liquid, the radioactive waste is made hardly soluble by alkaline earth metal being added thereto, and thereafter, alkali metal is added to the radioactive waste to dry an obtained deposit to turn it into powder, and this powder can be led into the container 11. Note that the acid waste liquid is, for example, a waste liquid used for washing used ion exchange resin of a cooling water cleaning system.

Further, when the radioactive waste is waste ion exchange resin, an amino group in the ion exchange resin is dissolved while it is immersed in an alkaline aqueous solution, and it can be led into the container 11 in a state where the generation of amine gas and ammonia gas is suppressed. Incidentally, in this case as well, the waste ion exchange resin obtained after its amino group is dissolved is dried to be reduced in volume and thereafter can be led into the container 11.

The cement is preferably alumina cement, blast-furnace slag cement, fly ash cement, and portland cement, for instance. These cement materials are easily obtained and inexpensive and are stable against seawater and chemical substances, and therefore are suitable as a cement material which solidifies and stabilizes the radioactive waste liquid as in this embodiment. In particular, alumina cement is cement made of bauxite, which is a raw material of aluminum, and limestone and containing aluminum oxide and exhibits high strength immediately after the kneading, and thus is excellent in a property of confining the radioactive waste.

As described above, after the radioactive waste and the water are put into the container 11, the drive current is supplied to the motor 14 by the control part 19 to rotate the rotating shaft 13, that is, the stirring blade 12, at a predetermined rotation speed. In addition, the cement is supplied into the container 11 from the cement storage tank 17 via the cement supply feeder 18 at a predetermined feeding rate. Incidentally, as described above, immediately after the feeding is started, the supply amount of the cement is made large so that the predetermined amount of the cement can be fed in as short a time as possible.

The rotation speed of the stirring blade 12 is set to a value suitable for sufficiently kneading the radioactive waste put into the container 11 and the finally fed cement to produce the cement-kneaded product. This rotation speed can be maintained at a constant value from the first. Consequently, it is possible to simplify the kneading operation of the radioactive waste and the cement. For example, the rotation speed can be several hundred rpm. Such a rotation speed can be decided based on data of a past experiment or data of a preliminary experiment. Alternatively, the rotation speed may be decided in a trial-and-error manner.

Incidentally, when the rotation speed deviates from the value, the radioactive waste and the cement are not sufficiently kneaded and the fed cement sometimes adheres to and remains on the stirring blade 12 without being kneaded. This necessitates a separate step of washing the stirring blade 12 to complicate the whole step of producing the cement-kneaded product.

Further, the rotation speed of the stirring blade 12 does not necessarily have to be maintained at a constant value and may be changed as necessary, provided that the radioactive waste and the cement are sufficiently kneaded. That is, the rotation speed of the stirring blade 12 can be in a predetermined range.

The time for kneading the radioactive waste and the cement is not particularly limited, provided that they are sufficiently kneaded and the cement-kneaded product can be produced. This time can be, for example, several ten minutes to several hours.

When the radioactive waste and the cement are sufficiently kneaded and the cement-kneaded product is being produced, the viscosity of the materials which are being kneaded increases. Accordingly, an attempt to rotate the stirring blade 12, that is, the rotating shaft 13 (and the motor 14) at the same rotation speed necessitates increasing the drive current supplied to the motor 14 by the control part 19. Meanwhile, the control part 19 can detect the increase in the drive current by monitoring the value of the drive current. The increase in the drive current indicates that the cement-kneaded product is being produced.

Therefore, especially when the feeding rate of the cement from the cement storage tank 17 into the container 11 via the cement supply feeder 18 is high, the increase in the drive current is detected as described above. Thereafter, if the supply of the cement into the container 11 is continued at the same feeding rate even after the cement-kneaded product is produced, an amount of the cement becomes too large, and the kneading of the radioactive waste and the cement becomes sometimes insufficient. In such a case, the excessive cement adheres to and remains on the stirring blade 12 without being kneaded. As a result, the step of washing the stirring blade 12 is separately needed, which complicates the whole step of producing the cement-kneaded product.

Further, since the cement-kneaded product does not contain a sufficient amount of the cement, strength of the cement-solidified product described below also deteriorates.

Therefore, in this embodiment, after the control part 19 confirms the increase in the drive current supplied to the motor 14 as described above, the control part 19 supplies a control signal to the cement supply feeder 10 to reduce the feeding rate of the cement supplied into the container 11 from the cement storage tank 17. This makes it possible to prevent the container 11 from containing an excessively large amount of the cement and to avoid the disadvantages ascribable to the presence of an excessively large amount of the cement.

Note that a degree to which the feeding rate of the cement is reduced can be decided based on data of a past experiment or data of a preliminary experiment. Alternatively, this degree may be decided in a trial-and-error manner.

The cement-kneaded product is cured by a hydration reaction to become the cement-solidified product when, for example, about ten hours pass from its production. When the container 11 containing the cement-solidified-product is buried in the ground, a disposal process of the radioactive waste is completed.

### (Second Embodiment)

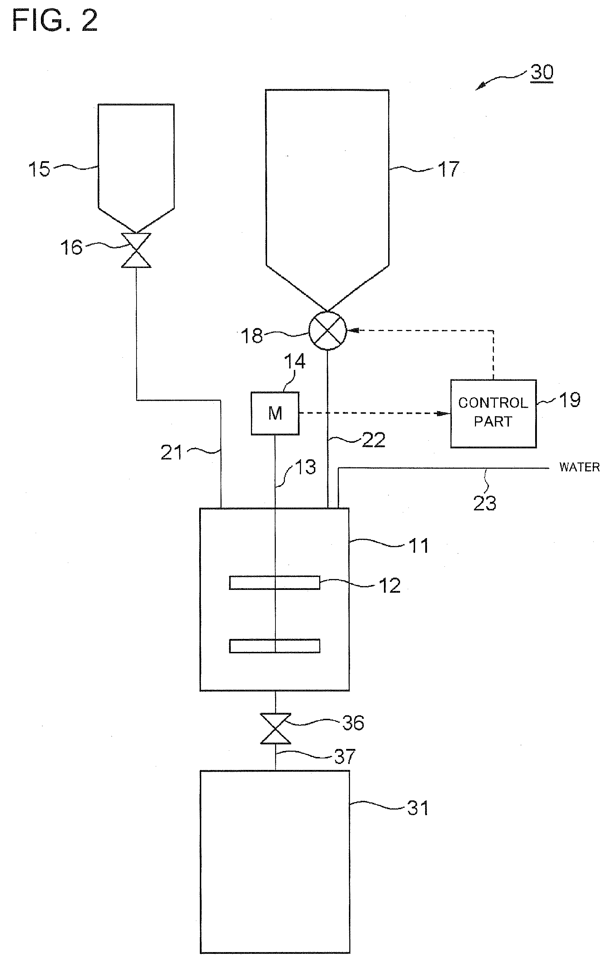

FIG. 2 is a diagram showing a schematic structure of a processing apparatus 10 for radioactive waste in this embodiment. Note that among constituent elements shown in FIG. 2, constituent elements similar or identical to the constituent elements shown in FIG. 1 are denoted by the same reference signs.

The processing apparatus 30 for radioactive waste shown in FIG. 2 is different from the processing apparatus 10 for radioactive waste shown in FIG. 1 in the following points. Specifically, a container 31 is provided under a container 11. The container 31 is connected to a center portion of a lower portion of the container 11 via a valve 36 and a pipe 37. A cement-kneaded product is produced in the container 11, and a cement-solidified product is produced in the container 31. That is, in this embodiment, the cement-solidified product is produced by an out-drum method.

The production of the cement-kneaded product in this embodiment is the same as that of the above-described first embodiment. The production of the cement-solidified product in this embodiment is different from that of the above-described first embodiment.

In producing the cement-kneaded product, into the container 11 of the processing apparatus 30, a radioactive waste is led from a radioactive waste storage tank 15 and water is led from a pipe 23 as described above.

After the kneading is started, cement is supplied into the container 11 from a cement storage tank 17 via a cement supply feeder 18. Then, after a control part 19 detects an increase in a drive current, a feeding rate of the cement into the container 11 is reduced.

In this case as well, the cement-kneaded product is cured by a hydration reaction when, for example, about ten hours pass from its production. Therefore, before such curing starts, the valve 36 of the pipe 37 provided under the container 11 is opened and the cement-kneaded product in the container 11 is transferred into the container 31. Then, the cement-kneaded product is left standing in the container 31 for several hours to several ten hours to be cured, whereby the cement-solidified product is produced. Thereafter, when the container 31 containing the cement-solidified product is buried in the ground, a disposal process of the radioactive waste is completed.

This can avoid the need for a separate step of washing a stirring blade 12 and the complication of the whole step of producing the cement-kneaded product. Further, the cement-kneaded product contains a sufficient amount of the cement, which can also prevent strength deterioration of the cement-solidified product.

### (Example 1)

A cement-solidification test on a 200 L scale was conducted with the following composition. Note that, in this example, the in-drum type processing apparatus shown in FIG. 1 was used. Further, for simplification of the experiment, only the kneading of cement was carried out without particularly using a radioactive waste.

### (1) Production of Cement-Kneaded Product

First, 118 kg water was fed into a drum (container 11) and was stirred while a cement mixer (stirring blade 12) was rotated at a 120 rpm rotation speed. Next, 232 kg ordinary portland cement was fed from the cement storage tank 17 into the container 11 via the cement supply feeder 18 at a constant feeding rate of 1350 kg/h. Even after the feeding of the cement was finished, the stirring was continued at 120 rpm and the time from the start of the feeding of the cement up to the end of the kneading was set to one hour.

### (2) Confirmation of Property Change of Cement Kneaded Product

During the kneading, a drive current supplied to the cement mixer (that is, the stirring blade 12 and the motor 14) was monitored. As a result, a value of the current sharply increased at an instant when seven minutes passed after the feeding of the cement was started (when an amount of the fed cement reached about 155 kg). In this example, even after the current value thus increased, the feeding of the cement was continued at the 1350 kg/h feeding rate without reducing the feeding rate of the cement as described above. Consequently, about 10 kg cement not kneaded adhered to the stirring blade 12. Thereafter, a cement-kneaded product was cured by a hydration reaction, whereby a cement-solidified product was obtained.

### (Example 2)

A cement-solidification test on a 200 L scale was conducted with the same composition as that of the example 1.

### (1) Production of Cement-Kneaded Product

First, 118 kg water was fed into a drum (container 11) and was stirred while a cement mixer (stirring blade 12) was rotated at a 120 rpm rotation speed. Next, 232 kg ordinary portland cement was fed from the cement storage tank 17 into the container 11 via the cement supply feeder 18 at a constant feeding rate of 1350 kg/h. After about seven minutes passed, the feeding rate of the cement was reduced to 400 kg/h, and even after the feeding of the cement was ended, the stirring was continued at 120 rpm and the time from the start of the feeding of the cement up to the end of the kneading was set to one hour. Thereafter, a cement-kneaded product was cured by a hydration reaction, whereby a cement-solidified product was obtained.

### (2) Confirmation of Property Change of Cement-Kneaded Product

During the kneading, a drive current supplied to the cement mixer (that is, the stirring blade 12 and the motor 14) was monitored. As a result, a value of the current sharply increased at an instant when about seven minutes passed after the feeding of the cement was started (when an amount of the fed cement reached about 155 kg). In this example, after the current value thus increased, the feeding rate of the cement was reduced to 400 kg/h as described above, and consequently, no situation occurred where cement not kneaded adhered to the stirring blade 12.

As is apparent from the above-described examples 1 and 2, when the feeding rate of the cement supplied and fed into the container 12 is reduced after the value of the drive current supplied to the cement mixer (that is, the stirring blade 12 and the motor 14) increases, no situation occurs where cement not kneaded remains and adheres to the stirring blade 12 (example 2). On the other hand, when the feeding rate of the cement supplied and fed into the container 11 is not reduced after the value of the drive current supplied to the cement mixer (that is, the stirring blade 12 and the motor 14) increases, the cement not kneaded remains and adheres to the stirring blade 12 (example 1). Therefore, in the latter case, a step of washing the stirring blade 12 is separately needed, which complicates the whole step of producing the cement-kneaded product.

Further, in the case of the example 1, since the cement-kneaded product does not contain a sufficient amount of the cement, the strength of the cement-solidified product deteriorates. On the other hand, in the case of the example 2, since the cement-kneaded product contains a sufficient amount of the cement, the strength deterioration of the cement-solidified product can be suppressed.

While certain embodiments have been described, these embodiments have been presented by way of example only, and are not intended to limit the scope of the invention, which is defined in the appended claims.

## Claims

1. A processing method for radioactive waste, comprising:
kneading a radioactive waste and cement in a container (11) by rotating a stirring blade (12) at a rotation speed in a predetermined range;
monitoring a value of a drive current for driving the stirring blade (12) during the kneading;
feeding the cement into the container (11) at a predetermined feeding rate during the kneading;
decreasing the feeding rate of the cement during the kneading, such that the feeding rate is lower than the predetermined feeding rate, when the monitored value of the drive current starts to increase from a given value;
obtaining a cement-kneaded product including the radioactive waste and the cement by the kneading while feeding the cement into the container; and
solidifying the cement-kneaded product to produce a cement-solidified product.

2. The processing method for radioactive waste according to claim 1, wherein the stirring blade (12) is rotated at a constant rotation speed.

3. The processing method for radioactive waste according to claim 1 or claim 2 wherein the cement-solidified product is produced in the container (11).

4. The processing method for radioactive waste according to any one of claims 1 to 2, wherein the cement-solidified product is produced in a container (31) different from the container (11).

5. The processing method for radioactive waste according to any one of claims 1 to 4, wherein the cement is at least one kind selected from a group consisting of portland cement, blast-furnace cement, fly ash cement, and alumina cement.

6. A processing apparatus (10, 30) for radioactive waste, comprising:
a container (11) having a stirring blade (12) to knead a radioactive waste and cement to produce a cement-kneaded product containing the radioactive waste and the cement;
a driving part (13, 14) configured to rotate the stirring blade (12);
a first control part (19) configured to control the driving part (13, 14) so as to cause the stirring blade (12) to rotate at a rotation speed in a predetermined range and to monitor a value of a drive current of the driving part;
a feeding part (18) configured to feed the cement into the container (11); and
**characterised in that** the processing apparatus further comprises a second control part (19) configured to control the feeding part (18) to feed the cement at a predetermined feeding rate until the monitored value of the drive current starts to increase from the given value,
and a third control part (19) configured to control the feeding part (18) so as to make the feeding rate of the cement lower than the predetermined feeding rate after the monitored value of the drive current starts to increase.

7. The processing apparatus (10, 30) for radioactive waste according to claim 6, wherein the stirring blade (12) is rotated at a constant rotation speed.

8. The processing apparatus (10, 30) for radioactive waste according to claim 6 or claim 7, wherein, in the container, the cement-kneaded product is kneaded and as a result a cement-solidified product is produced.

9. The processing apparatus (30) for radioactive waste according to any one of claims 6 to 8, further comprising a second container (31) in which the cement-kneaded product is solidified and as a result a cement-solidified product is produced.

10. The processing apparatus (10, 30) for radioactive waste according to any one of claims 6 to 9, wherein the cement is at least one kind selected from a group consisting of portland cement, blast-furnace cement, fly ash cement, and alumina cement.

## Patentansprüche

1. Verarbeitungsverfahren für radioaktiven Abfall umfassend:
Kneten eines radioaktiven Abfalls und Zements in einem Behälter (11) durch Drehen einer Rührschaufel (12) mit einer Rotationsgeschwindigkeit in einem vorbestimmten Bereich;
Beobachten eines Wertes eines Antriebsstroms zum Antreiben der Rührschaufel (12) während des Knetens;
Zuführen des Zements in den Behälter (11) mit einer vorbestimmten Zuführrate während des Knetens;
Reduzieren der Zuführrate des Zements während des Knetens, so dass die Zuführrate niedriger als eine vorbestimmte Zuführrate ist, wenn der beobachtete Wert des Antriebsstroms beginnt, von einem vorbestimmten Wert aus zu steigen;
Erhalten eines zementgekneteten Produktes enthaltend den radioaktiven Abfall und den Zement durch das Kneten, während der Zement in den Behälter zugeführt wird; und
Aushärten des zementgekneteten Produktes, um ein zementgehärtetes Produkt herzustellen.

2. Verarbeitungsverfahren für radioaktiven Abfall nach Anspruch 1, wobei die Rührschaufel (12) mit einer konstanten Drehgeschwindigkeit gedreht wird.

3. Verarbeitungsverfahren für radioaktiven Abfall nach Anspruch 1 oder Anspruch 2, wobei das zementgehärtete Produkt in dem Behälter (11) hergestellt wird.

4. Verarbeitungsverfahren für radioaktiven Abfall nach einem der Ansprüche 1-2, wobei das zementgehärtete Produkt in einem Behälter (31) produziert wird, der von dem Behälter (11) abweicht.

5. Verarbeitungsverfahren für radioaktiven Abfall nach einem der Ansprüche 1-4, wobei der Zement zumindest eine Art ist, die aus einer Gruppe ausgewählt ist, die aus Portlandzement, Hochofenzement, Flugaschezement und Tonerdezement besteht.

6. Verarbeitungsvorrichtung (10, 30) für radioaktiven Abfall umfassend:
einen Behälter (11) mit einer Rührschaufel (12), um einen radioaktiven Abfall und Zement zu kneten, um ein zementgeknetetes Produkt enthaltend den radioaktiven Abfall und den Zement zu produzieren;
einen Antriebsteil (13, 14), der dazu ausgestaltet ist, die Rührschaufel (12) zu drehen;
einen ersten Steuerungsteil (19), der dazu ausgestaltet ist, den Antriebsteil (13, 14) so zu steuern, dass die Rührschaufel (12) mit einer Drehgeschwindigkeit in einem vorbestimmten Bereich dreht, und einen Wert eines Antriebsstroms des Antriebsteils zu überwachen;
einen Zuführteil (18), der dazu ausgestaltet ist, den Zement in den Behälter (11) zuzuführen; und
**dadurch gekennzeichnet, dass** die Verarbeitungsvorrichtung ferner einen zweiten Steuerungsteil (19), der dazu ausgestaltet ist, den Zuführteil (18) so zu steuern, dass der Zement in einer vorbestimmten Zuführrate zugeführt wird, bis der überwachte Wert des Antriebsstroms beginnt, von einem vorgegebenen Wert aus zu steigen,
und einen dritten Steuerungsteil (19), der dazu ausgestaltet ist, den Zuführteil (18) so zu steuern, dass die Zuführrate des Zements niedriger als eine vorbestimmte Zuführrate ist, nachdem der überwachte Wert des Antriebsstroms zu steigen beginnt, aufweist.

7. Verarbeitungsvorrichtung (10, 30) für radioaktiven Abfall nach Anspruch 6, wobei die Rührschaufel (12) mit einer konstanten Drehgeschwindigkeit gedreht wird.

8. Verarbeitungsvorrichtung (10, 30) für radioaktiven Abfall nach Anspruch 6 oder Anspruch 7, wobei in dem Behälter das zementgeknetete Produkt geknetet wird und als eine Folge ein zementgehärtetes Produkt produziert wird.

9. Verarbeitungsvorrichtung (30) für radioaktiven Abfall nach einem der Ansprüche 6-8, ferner umfassend
einen zweiten Behälter (31), in dem das zementgeknetete Produkt gehärtet wird und als eine Folge ein zementgehärtetes Produkt produziert wird.

10. Verarbeitungsvorrichtung (10, 30) für radioaktiven Abfall nach einem der Ansprüche 6-9, wobei der Zement zumindest eine Art ist, die aus einer Gruppe ausgewählt ist, die aus Portlandzement, Hochofenzement, Flugaschezement und Tonerdezement besteht.

## Revendications

1. Procédé de traitement de déchets radioactifs, comprenant :
le malaxage d'un déchet radioactif et de ciment dans un conteneur (11) en faisant tourner une pale d'agitation (12) à une vitesse de rotation dans une plage prédéterminée ;
la surveillance d'une valeur d'un courant d'entraînement pour entraîner la pale d'agitation (12) au cours du malaxage ;
l'alimentation du conteneur (11) en ciment à un débit d'alimentation prédéterminé pendant le malaxage ;
la diminution du débit d'alimentation en ciment au cours du malaxage, de sorte que le débit d'alimentation soit inférieur au débit d'alimentation prédéterminé, lorsque la valeur surveillée du courant d'entraînement commence à augmenter à partir d'une valeur donnée ;
l'obtention d'un produit malaxé avec du ciment, incluant les déchets radioactifs et le ciment, par le malaxage tout en alimentant le conteneur en ciment; et
la solidification du produit malaxé avec du ciment pour fabriquer un produit solidifié au ciment.

2. Procédé de traitement de déchets radioactifs selon la revendication 1, dans lequel la pale d'agitation (12) tourne à une vitesse de rotation constante.

3. Procédé de traitement de déchets radioactifs selon la revendication 1 ou la revendication 2, dans lequel le produit solidifié au ciment est fabriqué dans le conteneur (11).

4. Procédé de traitement de déchets radioactifs selon l'une quelconque des revendications 1 à 2, dans lequel le produit solidifié au ciment est fabriqué dans un conteneur (31) différent du conteneur (11).

5. Procédé de traitement de déchets radioactifs selon l'une quelconque des revendications 1 à 4, dans lequel le ciment est d'au moins un type choisi dans un groupe constitué par du ciment de Portland, du ciment de haut fourneau, du ciment de cendres volantes, et du ciment d'alumine.

6. Appareil de traitement (10, 30) de déchets radioactifs, comprenant :
un conteneur (11) ayant une pale d'agitation (12) pour malaxer un déchet radioactif et du ciment pour fabriquer un produit malaxé avec du ciment contenant les déchets radioactifs et le ciment ;
une partie d'entraînement (13, 14) configurée pour faire tourner la pale d'agitation (12) ;
une première partie de commande (19) configurée pour commander la partie d'entraînement (13, 14) de manière à amener la pale d'agitation (12) à tourner à une vitesse de rotation dans une plage prédéterminée et à commander une valeur d'un courant d'entraînement de la partie d'entraînement ;
une partie d'alimentation (18) configurée pour alimenter le conteneur (11) en ciment ; et
**caractérisé en ce que** l'appareil de traitement comprend en outre une deuxième partie de commande (19) configurée pour commander la partie d'alimentation (18) pour alimenter le ciment à un débit d'alimentation prédéterminé jusqu'à ce que la valeur de commande du courant d'entrainement commence à augmenter à partir de la valeur donnée, et une troisième partie de commande (19) configurée pour commander la partie d'alimentation (18) de manière à rendre le débit d'alimentation du ciment inférieur au débit d'alimentation prédéterminé après que la valeur surveillée du courant d'entrainement commence à augmenter.

7. Appareil de traitement (10, 30) de déchets radioactifs selon la revendication 6, dans lequel la pale d'agitation (12) est entrainée en rotation à une vitesse de rotation constante.

8. Appareil de traitement (10, 30) de déchets radioactifs selon la revendication 6 ou la revendication 7, dans lequel, dans le conteneur, le produit malaxé avec du ciment est malaxé pour qu'un produit solidifié au ciment soit fabriqué.

9. Appareil de traitement (30) de déchets radioactifs selon l'une quelconque des revendications 6 à 8, comprenant en outre un second conteneur (31) dans lequel le produit malaxé avec du ciment est solidifié, et en résultat, pour qu'un produit solidifié au ciment soit fabriqué.

10. Appareil de traitement (10, 30) de déchets radioactifs selon l'une quelconque des revendications 6 à 9, dans lequel le ciment est au moins d'un type choisi dans un groupe constitué par du ciment Portland, du ciment de haut fourneau, du ciment de cendres volantes, et du ciment d'alumine.
